# FASCICULE DE BREVET EUROPEEN

(11) **EP 3 555 427 B1**
(45) Date de publication et mention de la délivrance du brevet: **22.04.2020**
(21) Numéro de dépôt: 17797921.8
(22) Date de dépôt: 08.11.2017
(51) Int. Cl.: F01D 25/02, F01D 5/28

(54) **AUBE ANTIGIVRE, COMPRESSEUR ET TURBOMACHINE ASSOCIÉE**
ANTIVEREISUNGSSCHAUFEL, VERDICHTER UND ZUGEHÖRIGE TURBOMASCHINE
ANTI-ICING BLADE, COMPRESSOR AND ASSOCIATED TURBOMACHINE

(30) Priorité: 15.12.2016 BE 201605937
(43) Date de publication de la demande: 23.10.2019
(73) Titulaire: Safran Aero Boosters SA, 4041 Herstal (BE)
(72) Inventeur: DE VRIENDT, Olivier, 4690 Bassenge (BE); RAIMARCKERS, Nicolas, 4263 Tourinne (Braives) (BE)
(74) Mandataire: Lecomte & Partners
(86) Numéro de dépôt international: PCT/EP2017/078603
(87) Numéro de publication internationale: WO 2018/108393

(56) Documents cités:
- WO-A2-2013/022467
- US-A1- 2011 147 219
- US-A1- 2013 032 646
- US-A1- 2013 236 322

## Description

L'invention se rapporte au domaine des aubes de turbomachine exposées au givrage. Plus précisément, l'invention concerne une aube présentant une surface prévue contre le givre dans une turbomachine. L'invention a également trait à une turbomachine axiale, notamment un turboréacteur d'avion ou un turbopropulseur d'aéronef.

### Technique antérieure

En vol, un turboréacteur expose une multitude d'aubes au phénomène de givrage. Dans ce contexte, une température négative conjuguée à une humidité de l'air aboutit à un dépôt de givre qui s'épaissit progressivement sur les surfaces des aubes. Dès lors, les profils aérodynamiques des aubes ne sont plus préservés, et la sécurité de fonctionnement du turboréacteur en pâtit. Afin de limiter le phénomène précité, les surfaces en bord d'attaque d'aubes peuvent être de type glaciophobe.

De telles surfaces glaciophobes présentent des propriétés physiques limitant la présence de givre ; notamment en limitant la solidification de gouttelettes d'eau s'y condensant, en repoussant les gouttelettes d'eau, et en présentant une adhésion glace/aube réduite. Soulignons en complément que le processus de formation du givre est également influencé par les turbulences produites par le bord d'attaque de l'aube. En effet, le bord d'attaque est un lieu de décélération et d'accélération du flux, ce qui influe notamment sur sa pression.

Le document US 2013/0236322 A1 divulgue un turboréacteur double flux avec une soufflante. La soufflante comprend une aube avec un bord d'attaque sujet au phénomène de givrage lors du fonctionnement du turboréacteur. Le bord d'attaque présente une surface modifiée à l'échelle nanométrique afin de s'opposer à la présence de givre. Or, un tel arrangement présente encore une accumulation de givre à même l'aube.

### Résumé de l'invention

### Problème technique

L'invention a pour objectif de résoudre au moins un des problèmes posés par l'art antérieur. Plus précisément, l'invention a pour objectif de réduire l'accumulation de givre sur une aube. L'invention a également pour objectif de proposer une solution simple, résistante, légère, économique, fiable, facile à produire, commode d'entretien, d'inspection aisée, et améliorant le rendement.

### Solution technique

L'invention a pour objet une aube antigivre de turbomachine, notamment pour compresseur de turbomachine, l'aube comprenant un bord d'attaque, un bord de fuite, une face intrados, une face extrados, et une surface glaciophobe formant le bord d'attaque, remarquable en ce qu'elle comprend en outre une surface hydrophobe prolongeant la surface glaciophobe vers le bord de fuite.

Selon des modes avantageux de l'invention, l'aube peut comprendre une ou plusieurs des caractéristiques suivantes, prises isolément ou selon toutes les combinaisons techniques possibles :
- La surface hydrophobe est une surface hydrophobe extrados et/ou une surface hydrophobe intrados.
- La surface hydrophobe extrados s'étend davantage en aval que la surface hydrophobe intrados.
- La surface glaciophobe est davantage formée en face extrados qu'en face intrados et/ou la surface glaciophobe s'étend sur la majorité de l'épaisseur de l'aube.
- La surface glaciophobe présente une contrainte de cisaillement limite avec la glace qui est inférieure ou égale à la contrainte de cisaillement limite avec la glace de chaque surface hydrophobe, préférentiellement au moins deux fois inférieure, ou au moins dix fois inférieure.
- L'aube comprend une moitié aval libre de surface hydrophobe.
- L'aube comprend une zone formant le bord de fuite dont la rugosité est supérieure à la rugosité de la ou de chaque surface hydrophobe, notamment disposée à distance et en amont dudit bord de fuite.
- La surface glaciophobe comprend des nanoreliefs, notamment des nanopiliers et/ou des nanocônes, et préférentiellement la surface glaciophobe présente une trame avec une micro rugosité sur laquelle sont formés les nanoreliefs, les nanopiliers et/ou les nanocônes.
- La ou chaque surface hydrophobe présente une rugosité Ra inférieure ou égale à : 0,60µm, ou 0,10µm.
- La ou chaque surface hydrophobe comprend des formes de sillons, notamment des microsillons, préférentiellement reliés par des bourrelets, notamment des micro-bourrelets.
- La surface glaciophobe touche la ou chaque surface hydrophobe de l'aube.
- L'aube est réalisée en un alliage métallique, notamment un alliage de titane et/ou un alliage d'aluminium.
- La surface glaciophobe comprend un revêtement anodisé et/ou un revêtement polymère éventuellement projeté par plasma.

L'invention a également pour objet un compresseur, notamment un compresseur basse pression, comprenant plusieurs rangées annulaires d'aubes dont une rangée amont et une ou plusieurs rangées aval, remarquable en ce qu'au moins une aube ou plusieurs aubes d'une même rangée ou chaque aube d'une même rangée est/ sont conformes à l'invention, éventuellement ladite ou les dites aubes est/sont conformes à l'invention forment une rangée amont ou une rangée aval du compresseur.

L'invention a également pour objet une turbomachine, notamment un turboréacteur, comprenant plusieurs rangées annulaires d'aubes et/ou un compresseur, remarquable en ce qu'au moins une aube ou plusieurs aubes ou chaque aube d'une même rangée annulaire est/sont conforme(s) à l'invention ; et/ou le compresseur est conforme à l'invention.

### Avantages apportés

L'invention optimise le coût et la réduction de la présence du givre sur une aube. Elle permet l'évacuation des gouttelettes d'eau après qu'elles aient rencontré le bord d'attaque en glissant contre les surfaces hydrophobes grâce à l'entrainement par le flux primaire. En cela, l'invention limite la présence de givre sur une aube dans le cas de figure où une gouttelette d'eau reste liquide après sa rencontre avec la surface glaciophobe de l'aube. Dès lors, la sécurité de fonctionnement du turboréacteur est préservée ; tout comme le rendement.

### Brève description des dessins

La figure 1 représente une turbomachine axiale selon l'invention.
La figure 2 est un schéma d'un compresseur de turbomachine selon l'invention.
La figure 3 illustre un profil d'aube de compresseur l'invention.
La figure 4 détaille une jonction entre une surface hydrophobe et la surface glaciophobe selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. La rugosité Ra correspond à l'écart moyen arithmétique par rapport à la ligne moyenne.

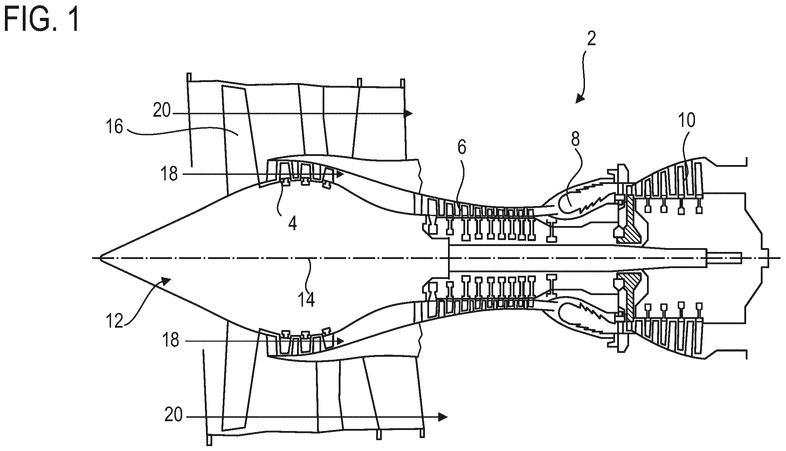

La figure 1 représente de manière simplifiée une turbomachine axiale 2. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu 'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et en un flux secondaire 20 traversant un conduit annulaire (partiellement représenté) le long de la machine pour ensuite rejoindre le flux primaire en sortie de turbine.

La soufflante peut être du type non carénée, par exemple à double rotor contrarotatifs, éventuellement en aval. Le flux secondaire peut être accéléré de sorte à générer une réaction de poussée. Les flux primaire 18 et secondaire 20 sont des flux annulaires coaxiaux et emmanchés l'un dans l'autre.

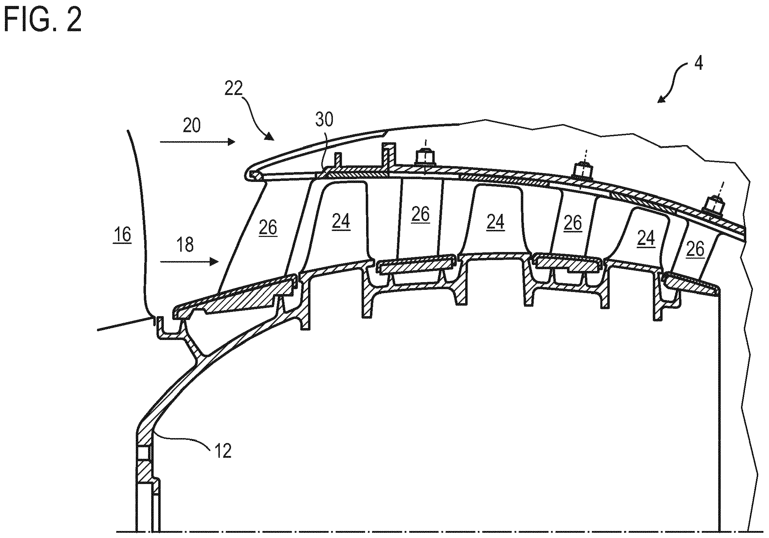

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois. Il peut être un tambour monobloc aubagé, ou comprendre des aubes à fixation queue d'aronde. Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression, notamment en pression statique.

Au sein d'une même rangée, les aubes statoriques 26 sont régulièrement espacées les unes des autres, et peuvent présenter une même orientation angulaire dans le flux. Avantageusement, les aubes d'une même rangée sont identiques. Optionnellement, l'espacement entre les aubes peut varier localement tout comme leurs orientations angulaires. Certaines aubes peuvent différer du reste des aubes de leur rangée. Le carter peut être formé de plusieurs anneaux, ou de demi-coquilles. Au moins une ou chaque rangée d'aubes (24 ; 26) du compresseur comprend au moins cinquante ou au moins quatre-vingts aubes.

Au moins une rangée d'aubes (24 ; 26) du compresseur comprend des aubes glaciophobes, chacune avec un bord d'attaque glaciophobe prolongé en aval par une surface hydrophobe en intrados et/ou en extrados. La rangée en question peut être la rangée en amont, soit en entrée et dans le bec de séparation 22 du compresseur 4. Ou encore, la rangée peut être placée en aval du compresseur 4. Eventuellement, la majorité ou toutes les rangées d'aubes du compresseur comprennent des aubes glaciophobes telles que présentées ci-dessus.

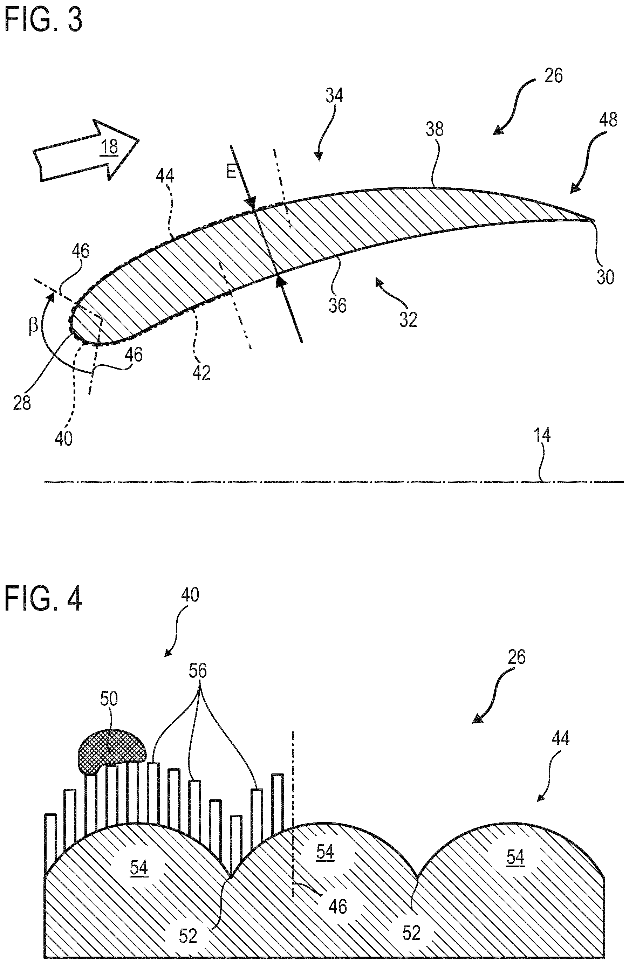

La figure 3 esquisse un profil aérodynamique d'une aube 26 du compresseur tel que celui représenté en figure 2. L'aube 26 peut être une aube glaciophobe telle que présentée ci-dessus. L'aspect glaciophobe est également désigné par le terme anglo-saxon « icephobic ». Le présent enseignement est ici détaillé en relation avec une aube statorique, or il pourrait également être appliqué à une aube rotorique du compresseur, ou encore à une aube de soufflante. L'axe de rotation 14 est représenté en guise de repère.

L'aube 26 présente un empilement de profils aérodymaniques évolutifs. Le présent profil aérodynamique peut être représentatif de l'empilement. Sur le présent profil aérodynamique, l'aube 26 montre un bord d'attaque 28 et un bord de fuite 30 en jonction de la face intrados 32 et la face extrados 34. La face intrados 32 comprend une surface intrados 36 incurvée tandis que la face extrados 34 inclue une surface extrados 38 bombée.

Le bord d'attaque 28 peut être sensiblement arrondi. Selon une variante, il peut être une ligne saillante. Il peut être plus arrondi que le bord de fuite 30 qui est optionnellement formé par une crête saillante. L'aube 26 comprend une surface glaciophobe 40 qui forme au moins partiellement son bord d'attaque 28, par exemple sur toute sa hauteur radiale. La surface glaciophobe 40 présente une géométrie liée à des caractéristiques limitant intrinsèquement la présence de givre. Ce résultat peut être atteint de manière passive énergétiquement. La surface glaciophobe 40 est présente sur au plus : 15%, ou 10% ou 5% ou 3% de la longueur de l'aube 26, ladite longueur étant mesurée selon la corde de l'aube 26. La corde s'étend du bord d'attaque 28 au bord de fuite 30. Elle peut être une corde moyenne dans l'espace. La surface glaciophobe 40 peut s'étendre sur au moins : 25% ou 50% ou 75% de l'épaisseur E de l'aube 26. L'épaisseur E peut être l'épaisseur maximale de l'aube 26. Ainsi, la surface glaciophobe 40 forme la face amont de l'aube 26.

En complément, l'aube 26 comprend des surfaces hydrophobes (42 ; 44), dont une surface hydrophobe intrados 42 et une surface hydrophobe extrados 44. Leur rugosité Ra peut être inférieure ou égale à 0,60 µm. Axialement, les surfaces hydrophobes (42 ; 44) recouvrent partiellement leur face (32 ; 34) respective. Elles peuvent notamment être présentes en moitié amont, la moitié aval étant éventuellement libre de surface hydrophobe. Selon une alternative de l'invention, les surfaces hydrophobes peuvent se développer en moitié aval.

La surface glaciophobe 40 présente une contrainte de cisaillement limite avec la glace qui est au moins quinze fois inférieure à la contrainte de cisaillement limite avec la glace de chaque surface hydrophobe (42 ; 44). Donc, la glace soit le givre adhère quinze fois mieux sur chaque surface hydrophobe que sur la surface glaciophobe 40.

La surface glaciophobe 40 et les surfaces hydrophobes (42 ; 44) présentent des limites communes. Elles présentent des jonctions 46 avec continuité de traitement ou de revêtement. Les jonctions 46 délimitant la surface glaciophobe 40 forment entre elles un angle β supérieure ou égal à : 45°, ou 60°, ou 90°, ou 120°. Les jonctions 46 peuvent être perpendiculaires à la surface glaciophobe 40.

Vers le bord de fuite 30, l'aube 26 présente une zone 48 avec une augmentation de la rugosité Ra, qui peut notamment dépasser 1,00 µm. Cette augmentation peut correspondre à la fin de chaque surface hydrophobe (42 ; 44). Par ailleurs, la surface hydrophobe extrados 44 peut continuer plus en aval que la surface hydrophobe intrados 42. Ces surfaces hydrophobes peuvent être concentrées là où elles imposent la plus forte déviation au flux primaire 18.

La figure 4 représente une face d'aube 26, par exemple une face extrados, à la jonction 46 entre la surface glaciophobe 40 et la surface hydrophobe extrados 44.

Chaque surface hydrophobe 44 prolonge la surface glaciophobe 40. Ces surfaces se touchent, notamment sur toute la hauteur de la surface glaciophobe 40 et/ou de l'aube 26. Ainsi, les gouttelettes d'eau 50 viennent au contact de la surface glaciophobe 40 sans s'y solidifier, c'est-à-dire sans s'y figer en gelant, puis s'évacuent en glissant contre la surface hydrophobe extrados 44. Dans ce mouvement, elles sont poussées par le flux primaire. Pour permettre cette évacuation, chaque surface hydrophobe peut comprendre des formes de microsillons 52 reliés par des micro-bourrelets 54. Cet ensemble participe à la définition de la microrugosité des surfaces hydrophobes. D'autres formes de microrugosités sont envisagées.

De son côté, la surface glaciophobe comprend une surface rugueuse avec un revêtement anodisé et/ou un revêtement polymère. Ce revêtement peut être appliqué par plasma. Il peut être un ruban collé sur le corps de l'aube. Il peut être issu d'une nanopoudre, éventuellement inorganique. Il peut s'agir d'un revêtement type PP-HMDSO. La surface glaciophobe peut comprendre une nanorugosité spécifique. Cette nanorugosité peut être formée par nanopiliers 56 et/ou des nanocônes. Par exemple la nanorugosité peut être taillée au laser dans une nanocouche, notamment une nanochouche polymère ou métallique. Par ailleurs, les nanoreliefs peuvent être formés sur la même trame, c'est-à-dire la même microrugosité que les surfaces hydrophobes.

## Revendications

1. Aube antigivre (24 ; 26) de turbomachine (2), notamment pour compresseur (4 ; 6) de turbomachine (2), l'aube (24 ; 26) comprenant un bord d'attaque (28), un bord de fuite (30), une face intrados (32), une face extrados (34), et une surface glaciophobe (40) formant le bord d'attaque (28),
**caractérisée en ce qu'**elle comprend en outre
une surface hydrophobe (42 ; 44) prolongeant la surface glaciophobe (40) vers le bord de fuite (30).

2. Aube antigivre (24 ; 26) selon la revendication 1, **caractérisée en ce que** la surface hydrophobe (42 ; 44) est une surface hydrophobe extrados (44) et/ou une surface hydrophobe intrados (42).

3. Aube antigivre (24 ; 26) selon la revendication 2, **caractérisée en ce que** la surface hydrophobe extrados (44) s'étend davantage en aval que la surface hydrophobe intrados (42).

4. Aube antigivre (24 ; 26) selon l'une des revendications 1 à 3, **caractérisée en ce que** la surface glaciophobe (40) est davantage formée en face extrados (34) qu'en face intrados (32) et/ou la surface glaciophobe (40) s'étend sur la majorité de l'épaisseur E de l'aube (24 ; 26).

5. Aube antigivre (24 ; 26) selon l'une des revendications 1 à 4, **caractérisée en ce que** la surface glaciophobe (40) présente une contrainte de cisaillement limite avec la glace qui est inférieure ou égale à la contrainte de cisaillement limite avec la glace de chaque surface hydrophobe (42 ; 44), préférentiellement au moins deux fois inférieure, ou au moins dix fois inférieure.

6. Aube antigivre (24 ; 26) selon l'une des revendications 1 à 5, **caractérisée en ce qu'**elle comprend une moitié aval libre de surface hydrophobe.

7. Aube antigivre (24 ; 26) selon l'une des revendications 1 à 6, **caractérisée en ce qu'**elle comprend une zone (48) formant le bord de fuite (30) dont la rugosité est supérieure à la rugosité de la ou de chaque surface hydrophobe (42 ; 44), notamment disposée à distance et en amont dudit bord de fuite (30).

8. Aube antigivre (24 ; 26) selon l'une des revendications 1 à 7, **caractérisée en ce que** la surface glaciophobe (40) comprend des nanoreliefs, notamment des nanopiliers (56) et/ou des nanocônes, et préférentiellement la surface glaciophobe (40) présente une trame avec une micro rugosité sur laquelle sont formés les nanoreliefs, les nanopiliers (56) et/ou les nanocônes.

9. Aube antigivre (24 ; 26) selon l'une des revendications 1 à 8, **caractérisée en ce que** la ou chaque surface hydrophobe (42 ; 44) présente une rugosité Ra inférieure ou égale à : 0,60µm, ou 0,10µm.

10. Aube antigivre (24 ; 26) selon l'une des revendications 1 à 9, **caractérisée en ce que** la ou chaque surface hydrophobe (42 ; 44) comprend des formes de sillons, notamment des microsillons (52), préférentiellement reliés par des bourrelets, notamment des micro-bourrelets.

11. Aube antigivre (24 ; 26) selon l'une des revendications 1 à 10, **caractérisée en ce que** la surface glaciophobe (40) touche la ou chaque surface hydrophobe de l'aube (24 ; 26).

12. Aube antigivre (24 ; 26) selon l'une des revendications 1 à 11, **caractérisée en ce qu'**elle est formée en alliage métallique, notamment un alliage de titane et/ou un alliage d'aluminium.

13. Aube antigivre (24 ; 26) selon l'une des revendications 1 à 12, **caractérisée en ce que** la surface glaciophobe (40) comprend un revêtement anodisé et/ou un revêtement polymère éventuellement projeté par plasma.

14. Compresseur (4 ; 6), notamment un compresseur basse pression (4), comprenant plusieurs rangées annulaires d'aubes (24 ; 26) dont une rangée amont et une ou plusieurs rangées aval, **caractérisé en ce qu'**au moins une aube ou plusieurs aubes (24 ; 26) d'une même rangée ou chaque aube d'une même rangée est/sont conformes à l'une des revendications 1 à 13, éventuellement ladite ou les dites aubes (24 ; 26) conformes à l'une des revendications 1 à 13 forment une rangée amont ou une rangée aval du compresseur.

15. Turbomachine (2), notamment un turboréacteur, comprenant plusieurs rangées annulaires d'aubes (24 ; 26) et/ou un compresseur (4 ; 6), **caractérisée en ce qu'**au moins une aube ou plusieurs aubes (24 ; 26) ou chaque aube d'une même rangée annulaire est/sont conforme(s) à l'une des revendications 1 à 13 ; et/ou le compresseur (4 ; 6) est conforme à la revendication 14.

## Patentansprüche

1. Eisabweisende Schaufel (24; 26) einer Turbomaschine (2), insbesondere für einen Turbomaschinen-Kompressor (4; 6) (2), wobei die Schaufel (24; 26) eine Vorderkante (28), eine Hinterkante (30), eine Druckseite (32), eine Saugseite (34) und eine eisabweisende Oberfläche (40) mit einem Vorsprung aufweist,
**dadurch gekennzeichnet, dass** sie ferner Folgendes umfasst:
eine hydrophobe Oberfläche (42; 44), die die eisabweisende Oberfläche (40) in Richtung der Hinterkante (30) verlängert.

2. Eisabweisende Schaufel (24; 26) nach Anspruch 1, **dadurch gekennzeichnet, dass** die hydrophobe Oberfläche (42; 44) eine hydrophobe Saugfläche (44) und/oder eine hydrophobe Druckfläche (42) ist.

3. Eisabweisende Schaufel (24; 26) nach Anspruch 2, **dadurch gekennzeichnet, dass** sich die hydrophobe Saugfläche (44) weiter stromabwärts als die hydrophobe Druckfläche (42) erstreckt.

4. Eisabweisende Schaufel (24; 26) nach einem der Ansprüche 1 bis 3, **dadurch gekennzeichnet, dass** die eisabweisende Oberfläche (40) mehr in der Saugfläche (34) als in der Druckfläche (32) ausgebildet ist und/oder sich die eisabweisende Oberfläche (40) über den größeren Teil der Stärke E der Schaufel (24; 26) erstreckt.

5. Eisabweisende Schaufel (24; 26) nach einem der Ansprüche 1 bis 4, **dadurch gekennzeichnet, dass** die eisabweisende Oberfläche (40) eine Scherung mit Eis aufweist, die kleiner oder gleich der Scherung mit Eis jeder hydrophoben Oberfläche (42; 44) ist, vorzugsweise mindestens zweimal niedriger oder mindestens zehnfach niedriger.

6. Eisabweisende Schaufel (24; 26) nach einem der Ansprüche 1 bis 5, **dadurch gekennzeichnet, dass** sie eine stromabwärts gerichtete Hälfte ohne hydrophobe Oberfläche umfasst.

7. Eisabweisende Schaufel (24; 26) nach einem der Ansprüche 1 bis 6, **dadurch gekennzeichnet, dass** sie eine Zone (48) umfasst, die die Hinterkante (30) bildet, deren Rauheit größer ist als die Rauheit der oder jeder hydrophoben Oberfläche (42; 44), und die insbesondere in einem gewissen Abstand und stromaufwärts der Hinterkante (30) angeordnet ist.

8. Eisabweisende Schaufel (24; 26) nach einem der Ansprüche 1 bis 7, **dadurch gekennzeichnet, dass** die eisabweichende Oberfläche (40) Nanoreliefs, insbesondere Nanosäulen (56) und/oder Nanozonen, umfasst und vorzugsweise die eisabweisende Oberfläche (40) ein Raster mit einer Mikrorauheit aufweist, auf der die Nanoreliefs, Nanosäulen (56) und/oder Nanozonen ausgebildet sind.

9. Eisabweisende Schaufel (24; 26) nach einem der Ansprüche 1 bis 8, **dadurch gekennzeichnet, dass** die oder jede hydrophobe Oberfläche (42; 44) einen Mittenrauwert Ra kleiner oder gleich 0,60 µm oder 0,10 µm aufweist.

10. Eisabweisende Schaufel (24; 26) nach einem der Ansprüche 1 bis 9, **dadurch gekennzeichnet, dass** die oder jede hydrophobe Oberfläche (42; 44) Nutformen, insbesondere Mikrorillen (52), umfasst, die vorzugsweise durch Kügelchen, insbesondere Mikro-Kügelchen, verbunden sind.

11. Eisabweisende Schaufel (24; 26) nach einem der Ansprüche 1 bis 10, **dadurch gekennzeichnet, dass** die eisabweisende Oberfläche (40) die oder jede hydrophobe Oberfläche der Schaufel (24; 26) berührt.

12. Eisabweisende Schaufel (24; 26) nach einem der Ansprüche 1 bis 11, **dadurch gekennzeichnet, dass** sie aus einer Metalllegierung, insbesondere einer Titanlegierung und/oder einer Aluminiumlegierung, gefertigt ist.

13. Eisabweisende Schaufel (24; 26) nach einem der Ansprüche 1 bis 12, **dadurch gekennzeichnet, dass** die eisabweisende Oberfläche (40) eine Eloxal- und/oder Polymerbeschichtung aufweist, die möglicherweise durch Plasmaspritzen aufgebracht wurde.

14. Kompressor (4; 6), insbesondere Niederdruckkompressor (4), mit mehreren ringförmigen Schaufelanordnungen (24; 26) mit einer stromaufwärts gerichteten Reihe und einer oder mehreren stromabwärts gerichteten Reihen, **dadurch gekennzeichnet, dass** mindestens eine oder mehrere Schaufeln (24; 26) derselben Anordnung oder jede Schaufel derselben Anordnung einem der Ansprüche 1 bis 13 entspricht/entsprechen, wobei optional die eine oder die mehreren Schaufeln (24; 26) nach einem der Ansprüche 1 bis 13 eine stromaufwärts gerichtete oder stromabwärts gerichtete Anordnung des Kompressors bilden.

15. Turbomaschine (2), insbesondere Turbinenstrahltriebwerk, mit mehreren ringförmigen Anordnungen von Schaufeln (24; 26) und/oder einem Kompressor (4; 6), **dadurch gekennzeichnet, dass** mindestens eine oder mehrere Schaufeln (24; 26) oder jede Schaufel derselben ringförmigen Anordnung einem der Ansprüche 1 bis 13 entspricht/entsprechen; und/oder der Kompressor (4; 6) Anspruch 14 entspricht.

## Claims

1. Anti-icing blade (24; 26) of a turbo machine (2), in particular for a turbo machine (2) compressor (4; 6), the blade (24; 26) comprising a leading edge (28), a trailing edge (30), an intrados face (32), an extrados face (34), and a glaciophobic surface (40) forming the leading edge (28),
**characterised in that** it further comprises
a hydrophobic surface (42; 44) extending from the glaciophobic surface (40) towards the trailing edge (30).

2. Anti-icing blade (24; 26) according to claim 1, **characterised in that** the hydrophobic surface (42; 44) is an extrados hydrophobic surface (44) and/or an intrados hydrophobic surface (42).

3. Anti-icing blade (24; 26) according to claim 2, **characterised in that** the extrados hydrophobic surface (44) extends more downstream than the intrados hydrophobic surface (42).

4. Anti-icing blade (24; 26) according to any one of claims 1 to 3, **characterised in that** the glaciophobic surface (40) is formed more in the extrados face (34) than in the intrados face (32) and/or the glaciophobic surface (40) extends over the majority of the thickness E of the blade (24; 26).

5. Anti-icing blade (24; 26) according to any one of claims 1 to 4, **characterised in that** the glaciophobic surface (40) has a shear stress limit with ice which is less than or equal to the shear stress limit with ice of each hydrophobic surface (42; 44), preferably at least twice less, or at least ten times less.

6. Anti-icing blade (24; 26) according to any one of claims 1 to 5, **characterised in that** it comprises a downstream half free of hydrophobic surface.

7. Anti-icing blade (24; 26) according to any one of claims 1 to 6, **characterised in that** it comprises a zone (48) forming the trailing edge (30) whose roughness is greater than the roughness of the or each hydrophobic surface (42; 44), in particular disposed at a distance and upstream of said trailing edge (30).

8. Anti-icing blade (24; 26) according to any one of claims 1 to 7, **characterised in that** the glaciophobic surface (40) comprises nanoreliefs, in particular nanopillars (56) and/or nanocones, and preferably the glaciophobic surface (40) has a grid with a micro-roughness on which the nanoreliefs, nanopillars (56) and/or nanocones are formed.

9. Anti-icing blade (24; 26) according to any one of claims 1 to 8, **characterised in that** the or each hydrophobic surface (42; 44) has a roughness Ra less than or equal to: 0.60µm, or 0.10µm.

10. Anti-icing blade (24; 26) according to any one of claims 1 to 9, **characterised in that** the or each hydrophobic surface (42; 44) comprises groove shapes, in particular microgrooves (52), preferably connected by beads, in particular microbeads.

11. Anti-icing blade (24; 26) according to any one of claims 1 to 10, **characterised in that** the glaciophobic surface (40) touches the or each hydrophobic surface of the blade (24; 26).

12. Anti-icing blade (24; 26) according to any one of claims 1 to 11, **characterised in that** it is formed of a metal alloy, in particular a titanium alloy and/or an aluminium alloy.

13. Anti-icing blade (24; 26) according to any one of claims 1 to 12, **characterised in that** the glaciophobic surface (40) comprises an anodised coating and/or a polymer coating optionally sprayed by plasma.

14. Compressor (4; 6), in particular a low-pressure compressor (4), comprising a plurality of annular rows of blades (24; 26) including an upstream row and one or a plurality of downstream rows, **characterised in that** at least one blade or a plurality of blades (24; 26) of a same row or each blade of a same row is/are in accordance with any one of claims 1 to 13, optionally said blade or blades (24; 26) in accordance with any one of claims 1 to 13 forms/form an upstream row or a downstream row of the compressor.

15. Turbomachine (2), in particular a turbojet engine, comprising a plurality of annular rows of blades (24; 26) and/or a compressor (4; 6), **characterised in that** at least one blade or a plurality of blades (24; 26) or each blade of a same annular row is/are in accordance with any one of claims 1 to 13; and/or the compressor (4; 6) is in accordance with claim 14.
